# EUROPÄISCHE PATENTSCHRIFT

(11) **EP 3 010 382 B1**
(45) Veröffentlichungstag und Bekanntmachung des Hinweises auf die Patenterteilung: **04.11.2020**
(21) Anmeldenummer: 15738248.2
(22) Anmeldetag: 27.04.2015
(51) Int. Cl.: A47J 37/07

(54) **GRILL UND HOLZKOHLEKAMMER**
GRILL AND WOOD-CHARCOAL CHAMBER
GRILL ET CHAMBRE À CHARBON DE BOIS

(30) Priorität: 15.07.2014 DE 102014213770
(43) Veröffentlichungstag der Anmeldung: 27.04.2016
(73) Patentinhaber: LotusGrill GmbH, 67117 Limburgerhof (DE)
(72) Erfinder: OHLER, Hans, 67117 Limburgerhof (DE); OHLER, Mischa, 67346 Speyer (DE); PAAKKANEN, Harri, 69126 Heidelberg (DE)
(74) Vertreter: Patent- und Rechtsanwälte Ullrich & Naumann
(86) Internationale Anmeldenummer: PCT/DE2015/200280
(87) Internationale Veröffentlichungsnummer: WO 2016/008478

(56) Entgegenhaltungen:
- EP-B1- 1 838 187
- WO-A1-2014/094745
- KR-B1- 101 226 468

## Beschreibung

Die Erfindung betrifft einen Tischgrill, mit einem Gehäuse, einer innerhalb des Gehäuses allseitig mit Abstand zum Gehäuse angeordneten Trägerschale, einer in der Trägerschale stehenden, im wesentlichen zylindrischen Holzkohlekammer mit zylindrischer Wand und mit Deckel, einem oberhalb der Holzkohlekammer angeordneten Grillrost und einer Luftversorgungseinrichtung, die von unterhalb der Trägerschale einen in die Holzkohlekammer gerichteten Luftstrom erzeugt.

Entsprechend den gattungsbildenden Merkmalen handelt es sich um einen Holzkohlegrill, der sich aufgrund seiner besonderen Konstruktion und Ausstattung ganz besonders als Tischgrill eignet. Lediglich beispielhaft sei dazu auf die EP 1 838 187 B1 verwiesen.

Für den bekannten Holzkohlegrill ist wesentlich, dass er innerhalb eines Gehäuses eine Holzkohlekammer für glühende Holzkohle aufweist, wobei die Holzkohlekammer mit einer siebartigen Abdeckung versehen ist. Die Holzkohleschale ist mit einer geschlossenen Wandung ausgestattet und wird über eine zentrische, kegelförmige Aufwölbung und eine darin angeordneten Lochung von unten her mit Verbrennungsluft versorgt.

Die aus dem Stand der Technik bekannte Holzkohlekammer ist in mehrerlei Hinsicht problematisch. Sie ist im Wesentlichen geeignet zur Wärmeabstrahlung nach oben, nämlich durch ein abdeckendes Flammsieb hindurch. Aufgrund der schalenförmigen Ausbildung der Holzkohlekammer reflektiert sie im Wesentlichen die Wärmestrahlung nach oben, wodurch die wirksame Fläche ganz erheblich reduziert ist. Außerdem droht das Flammsieb aufgrund der filigranen Ausgestaltung, insbesondere nach mehreren Heizzyklen, zu brechen bzw. spröde zu werden.

Aus WO 2014/094745 ist ein gattungsbildender Tischgrill bekannt, der eine Holzkohlekammer mit einer als feinmaschiges Sieb ausgeführten Wandung hat. Aufgrund dieser filigranen Ausgestaltung ist die Holzkohlekammer wenig stabil und in der Handhabung problematisch.

Im Konkreten zeigt WO 2014/094745 einen Tischgrill mit zylindrischer Holzkohlekammer mit Deckel. Oberhalb der Holzkohlekammer und somit auch oberhalb des Deckels ist ein Grillrost angeordnet.

Außerdem ist bei dem bekannten Tischgrill eine Luftversorgungseinrichtung vorgesehen, die von unterhalb der Trägerschale einen in die Holzkohlekammer gerichteten Luftstrom erzeugt.

Aufgrund der Ausgestaltung der Holzkohlekammer ist eine allseitige Wärmeabstrahlung nahezu ungehindert möglich. Glut wird durch das feinmaschige Sieb zurückgehalten, kann jedenfalls nicht durch die Wand nach außerhalb der Holzkohlekammer gelangen. Dieser Vorteil bedingt jedoch einen erheblichen Nachteil dahingehend, dass die Wand der Holzkohlekammer eine nur unzureichende Stabilität aufweist. Entsprechend ist dort ein verstärkter Randbereich vorgesehen, ohne den die Holzkohlekammer nicht handhabbar wäre, nämlich bereits beim bloßen Anfassen zerdrückt bzw. deformiert würde. Auch im unteren Randbereich der Holzkohlekammer ist eine Verstärkung ausgebildet, nämlich ein geflanschter unterer Randbereich, der ebenfalls als notwendige Verstärkung dient.

Die beiden stabilisierenden Randbereiche fassen somit das vorzugsweise feinmaschige Sieb oben und unten ein und sorgen für eine gewisse Stabilität der Wandung bzw. der Holzkohlekammer, die letztendlich aus dem Sieb und den randseitigen Verstärkungen besteht.

Im Lichte der voranstehenden Ausführungen liegt der Erfindung die Aufgabe zugrunde, den gattungsbildenden Grill derart auszugestalten und weiterzubilden, dass er sich bei einfachster Konstruktion zur gefahrlosen Handhabung eignet, wobei die Holzkohlekammer formstabil ausgeführt sein soll, so dass sie einem ständigen Gebrauch auch bei hohen Temperaturen innerhalb der Kammer Stand hält und gleichzeitig nahezu ungehindert hinreichend Wärme abstrahlen kann.

Voranstehende Aufgabe ist durch die Merkmale des Patentanspruchs 1 gelöst. Danach ist der gattungsbildende Grill dadurch gekennzeichnet, dass die Wand der Holzkohlekammer aus Edelstahlblech gefertigt und geschlitzt oder gelocht ist, wobei die Schlitze oder Löcher gerade so breit ausgelegt sind, dass es zur optimalen Wärmeabstrahlung reicht, wobei sie so schmal sind, dass weder Glut noch Funkenflug durch die Schlitze oder Löcher hindurch nach außen gelangt, und wobei die Schlitze eine Schlitzbreite im Bereich von 1 mm bis 3 mm oder die Löcher einen Lochdurchmesser im Bereich von 1 mm bis 3 mm haben.

Es ist erkannt worden, dass sich eine zylindrisch ausgeführte Holzkohlekammer ganz besonders eignet, da diese die Wärme einerseits nach oben und andererseits durch deren Wandung hindurch zur Seite hin gleichzeitig abstrahlt. In besonders vorteilhafter Weise ist die zylindrische Wand der Holzkohlekammer aus einem Edelstahlblech gefertigt, wobei dieses Edelstahlblech, zur Begünstigung der allseitigen Abstrahlung, geschlitzt oder gelocht sein kann.

In vorteilhafter Weise hat die Wand der Holzkohlekammer axial verlaufende, vorzugsweise parallel zueinander ausgebildete Schlitze, die sich zwischen einem durchgehenden bodenseitigen Rand der Kammer und einem durchgehenden deckelseitigen Rand der Kammer erstrecken. Auch ist es denkbar, dass die Schlitze von der axialen Ausrichtung abweichen und beispielsweise unter einem Winkel schräg zur Achse verlaufen. Wesentlich ist jedenfalls, dass die Schlitze gerade so breit ausgelegt sind, dass es zur optimalen Wärmeabstrahlung reicht, wobei sie so schmal sein müssen, dass weder Glut noch Funkenflug durch die Schlitze hindurch nach außen gelangt.

Alternativ ist es denkbar, dass die Wand aus mehreren Wandelementen bzw. Segmenten besteht, die versetzt zueinander angeordnet sind und dabei die Wand der Holzkohlenkammer bilden. Dabei können sich die Wandelemente zumindest geringfügig überlappen, so dass jeweils zwischen den sich überlappenden Wandelementen ein axial verlaufender Schlitz, besser gesagt eine Art Teilringfläche, gebildet ist. Je nach Grad der Überlappung ist dabei wirksam verhindert, dass Glut bzw. Funkenflug nach außen gelangt.

Die Schlitze können je nach Bedarf ausgebildet sein, wobei die Schlitzbreite im Bereich von 1 mm bis 3 mm liegt.

Im Rahmen einer weiteren, zu bevorzugenden Alternative ist die Wand als Lochblech ausgeführt, wobei das Lochblech eine runde, eine ovale bzw. elliptische oder längliche, eine rechteckige, vorzugsweise eine quadratische, oder eine mehreckige, vorzugsweise eine sechseckige Lochung, haben kann. Die Lochung benachbarter Lochreihen kann auf einer horizontalen Linie liegen oder aber versetzt zueinander angeordnet sein.

Die Löcher haben bei unterschiedlichster Gestaltung einen Durchmesser bzw. eine Breite im Bereich von 1mm bis 3mm, vorzugsweise im Bereich von 2mm.

Die Schlitze oder Lochungen sind vorzugsweise stanztechnisch hergestellt. Die Wand der Holzkohlekammer ist dabei derart gebogen, dass die durch Stanzen entstandenen Stülpungen nach innen gerichtet sind und dabei kleine Ränder bilden, die abermals den Funkenflug nach außen verhindern.

Der Deckel schließt die Holzkohlekammer nach oben ab. Die Wärmestrahlung nach oben ist ganz besonders dadurch begünstigt, dass der abnehmbare Deckel in seiner Fläche ebenfalls gelocht ist, wobei die Lochung gerade so groß ausgeführt ist, dass Wärmestrahlung ungehindert durch die Lochung hindurchtreten kann, jedoch die Glut im inneren der Holzkohlekammer verbleibt, auch für denn Fall, dass der Grill unsachgerecht gekippt wird oder sogar umfällt. Insoweit ist zu gewährleisten, dass der abnehmbare Deckel in seiner die Holzkohlkammer schließenden Position, d.h. auf den oberen Rand der Holzkohlekammer aufgesetzt, durch mechanische Mittel fixiert ist.

In vorteilhafter Ausgestaltung hat die Lochung des Deckels vorzugsweise identische Durchgänge, bspw. mit einem Durchmesser im Bereich von 3 mm bis 9 mm, vorzugsweise mit einem Durchmesser von 6 mm. Durch diese Maßnahme kann hinreichend viel Wärmestrahlung nach oben austreten, ist jedoch der ungewollte Austritt von glühenden Bestandteilen der Holzkohle wirksam vermieden, auch für den Fall, dass der gesamte Grill mit der Holzkohlekammer gekippt wird.

In ganz besonders vorteilhafter Weise umfasst die Lochung mindestens zwei kreisringförmig angeordnete Lochgruppen, wobei die so gebildeten Kreisringe koaxial zueinander angeordnet sein können.

Der Deckel kann mindestens zwei Flächen mit unterschiedlichem axialem Abstand zum Deckelrand aufweisen, wobei den unterschiedlichen Flächen die jeweilige Lochgruppe zugeordnet ist. Entsprechend befindet sich in jeder Ebene des Deckels eine Lochgruppe, wobei die Löcher bzw. Durchgänge äquidistant zueinander ausgebildet sein können.

Im Konkreten kann der Deckel zwischen den Flächen und ggf. an seinem Randbereich nach unten abgewinkelte bzw. geneigte Übergangsflächen aufweisen, entlang derer auf den Deckel tropfendes Fett zur Seite hin nach unten ablaufen kann. Dadurch ist in Bezug auf die zu vermeidende Verbrennung von Fett eine wirksame Barriere geschaffen, wobei weitere Maßnahmen später noch erläutert werden.

Der Deckel ist derart ausgestaltet und dimensioniert, dass er mit seinem Randbereich die Holzkohlekammer in deren oberen Bereich übergreift bzw. umschließt. Es kann sich bei dem Deckel um eine Art Stülpdeckel handeln, wobei der Deckel auf den oberen Randbereich der Holzkohlekammer aufdrückbar oder aufpressbar ist. Auch ein Einrasten wäre bei wulstartiger Ausgestaltung des oberen Randbereichs der Holzkohlekammer und bei entsprechender Ausgestaltung des übergreifenden Randes des Deckels denkbar.

In ganz besonders vorteilhafter Weise umfasst der Deckel einen oberen, vorzugsweise auch als Henkel dienenden Klemmbügel mit einer zumindest gewissen Elastizität, der zum Klemmen und Festlegen der geschlossenen Holzkohlekammer zwischen dem Bodenbereich der Trägerschale und dem Grillrost dient. Mit anderen Worten wird durch Aufsetzen bzw. Festlegen des Grillrosts die Holzkohlekammer festgelegt, wobei dem Klemmbügel eine spannende Funktion zukommt. Durch diese Maßnahme ist die Holzkohlekammer im geschlossenen Zustand gesichert, so dass ein unbeabsichtigtes Herausfallen glühender Holzkohle auch dann ausgeschlossen ist, wenn der gesamte Grill kippt. Ein hohes Maß an Sicherheit ist realisiert.

Zur abermaligen Begünstigung des Wirkungsgrades der als Brennkammer dienenden Holzkohlekammer ist der Boden der Holzkohlekammer gelocht, so dass diese von unten her über eine Anzündhilfe befeuert werden und nach der Befeuerung ziehen kann. Auch diese Lochung kann mindestens zwei kreisringförmig angeordnete Lochgruppen umfassen, ähnlich wie bei dem Deckel. Die so gebildeten Kreisringe sind ebenso koaxial zueinander angeordnet. Aufgrund dieser Maßnahme ist die Holzkohlekammer in idealer Weise auch zum Anfeuern der Holzkohle geeignet, zumal von unterhalb der Holzkohlekammer ein Anzünden mittels Anzündhilfe möglich ist. Jedenfalls dient die Lochung im Bodenbereich der Holzkohlekammer einerseits zum Anzünden der in der Holzkohlekammer befindlichen Holzkohle und andererseits zur Luftversorgung des Innenraums der Holzkohlekammer.

In konstruktiver Hinsicht ist es in Bezug auf die Holzkohlekammer von Vorteil, wenn der Boden gegenüber einem über den Boden hinaus ragenden freien Rand zumindest geringfügig nach innen verlagert ist und wenn der Rand mit einem umlaufenden, nach außen abragenden Flansch, einer Auskragung, etc. endet. Durch diese Maßnahme kommt die Holzkohlekammer nicht etwa mit dem Bodenbereich unmittelbar auf einer Unterlage zum Stehen, steht vielmehr mit dem freien Rand auf der Unterlage, und zwar unter Bildung eines als Anzündraum dienenden Raums zwischen der Unterlage und dem Bodenbereich.

Zur Stabilisierung des die Holzkohlekammer bildenden Körpers ist der untere und/oder der obere Rand der Holzkohlekammer durch Falzen, Börteln, etc. verstärkt. Auch ist es denkbar, dass die Randbereiche einen angeformten, verstärkten Metallrand aufweisen.

Die Wandung der Holzkohlekammer sollte ebenso zur hinreichend guten Abstrahlung von Wärme geeignet sein. Dazu ist die Wandung als umlaufendes, vorzugsweise feinmaschiges Sieb ausgeführt, so dass eine allseitige Wärmeabstrahlung nahezu ungehindert möglich ist. Bei dem Sieb sollte es sich um ein qualitativ hochwertiges Sieb aus Edelstahl handeln, welches für hinreichend langen Gebrauch geeignet ist.

In Bezug auf die Holzkohlekammer sei zusammenfassend festgehalten, dass diese in ganz besonders vorteilhafter Weise über eine umlaufende Siebwandung verfügt, wobei der mit der umlaufenden Siebwandung fest verbundene Bodenbereich nach innen in die Holzkohlekammer hinreinragt und nach unten einen Raum definiert. Außerdem ist der Bodenbereich der Holzkohlekammer gelocht, so dass eine darunter angeordnete Anzündhilfe in die Holzkohlekammer hinein wirken kann. Obendrein ist die Luftströmung in die Holzkohlekammer hinein begünstigt. Ähnlich verhält es sich mit dem Deckel, der zwar die Holzkohlekammer sicher abschließt, jedoch aufgrund der dort vorgesehenen Lochung in idealer Weise eine nahezu freie Wärmeabstrahlung nach oben zulässt. Durch die Summe aller die Holzkohlekammer betreffenden Maßnahmen ist der Wirkungsgrad begünstigt.

Wie bereits zuvor erwähnt, wird die Holzkohlekammer auf eine Unterlage gestellt, wobei es sich dabei in vorteilhafter Weise um eine Anzündschale handelt, auf die die Holzkohlekammer mit ihrem unteren Rand steht. Der Raum zwischen dem Boden der Anzündschale und dem nach innen versetzten Boden der Holzkohlekammer dient zum Beladen mit einer vorzugsweise pastösen Anzündhilfe, die im eingesetzten Zustand der Anzündschale in der Trägerschale entzündet wird. Danach wird die Holzkohlekammer auf bzw. in die Anzündschale gestellt und dort entsprechend der zuvor beschriebenen Klemmung festgelegt.

Zur idealen Positionierung der Anzündschale umfasst diese mindestens drei nach unten abragende Stellfüße, mit denen sie auf dem Boden der Trägerschale steht. Andere Positioniermechanismen sind realisierbar.

Zur Begünstigung bzw. Sicherung einer geeigneten Luftströmung ist im Bodenbereich der Anzündschale, vorzugsweise mittig, ein Lufteinlass zum Einleiten der von der Luftversorgungseinrichtung kommenden Luft vorgesehen. Der Lufteinlass ragt vorzugsweise mittels eines vom Bodenbereich nach oben abragenden Flanschs, Rands oder dgl. in die Anzündschale hinein, so dass von dort aus ein Hineingleiten einer pastösen Anzündhilfe in Richtung der Luftversorgungseinrichtung wirksam verhindert ist.

Das Gehäuse ist in seinem unteren Bereich in vorteilhafter Weise mit einem Innenboden ausgestattet, der in das Gehäuse eingeschweißt sein kann. Die Luftversorgungseinrichtung kann ein Lufteinlassrohr umfassen, welches sich von unterhalb des Innenbodens durch diesen hindurch oder mit diesem integral ausgebildet durch die Trägerschale und durch den Boden der Anzündhilfe hindurch in den Bereich der Anzündhilfe hinein erstreckt. Auf das Lufteinlassrohr kann die Trägerschale und die Anzündschale aufgeschoben bzw. aufgesteckt sein, so dass das Lufteinlassrohr gleichzeitig zur eindeutigen Positionierung der Trägerschale und der Anzündschale dient.

Unterhalb des Innenbodens, nahe des Einlasses des Lufteinlassrohres, kann ein Ventilator bzw. ein Gebläse angeordnet sein. Der Ventilator bläst geregelt Luft in das Lufteinlassrohr, je nach Bedarf bzw. je nach Einstellung.

Bei dem Ventilator handelt es sich um ein miniaturisiertes Aggregat mit äußerst geringem Stromverbrauch, ähnlich oder identisch dem Ventilator im Gehäuse eines Computers. Außerdem arbeitet der Ventilator nahezu geräuschlos.

In ganz besonders vorteilhafter Weise ist eine Regelung für den Betrieb des Ventilators vorgesehen, die den Ventilator bei Erreichen einer vorzugsweise oberhalb des Grillrosts detektierbaren Betriebstemperatur herunterregelt.

Unterhalb des Innenbodens des Gehäuses kann ein Schalter, ein Regler und ein Batteriefach mit mindestens einer Batterie oder einem Akku zur Stromversorgung für das Gebläse angeordnet sein. Der Schalter und der Regler sitzen in vorteilhafter Weise zur Betätigung von außen in der Gehäusewand. Das Batteriefach ist von außerhalb des Gehäuses zugänglich, vorzugsweise von unterhalb des Gehäuses über eine dort vorgesehene Klappe.

Zur Begünstigung der Luftströmung über die Anzündschale in die Holzkohlekammer hinein weist das Gehäuse im Bereich unterhalb des Innenbodens zur Luftzufuhr dienende Öffnungen, vorzugsweise in Form dekorativer Durchgänge, bspw. in Form schlitzartiger Öffnungen, auf. Bei entsprechender Positionierung des Ventilators wird von außerhalb des Gehäuses Luft angesaugt und in den Lufteinlass bzw. in das Lufteinlassrohr bis in die Holzkohlekammer hinein geblasen. Der Lufteinlass kann Teil bzw. integrierter Bestandteil eines Ventilatorgehäuses sein.

Auch ist es denkbar, dass das Gehäuse im Bereich oberhalb des Innenbodens zur Kühlung im Bereich zwischen dem Gehäuse und der Trägerschale dienende Öffnungen, vorzugsweise in Form dekorativer Durchgänge bzw. Schlitze über den gesamten Umfang des Gehäuses hinweg aufweist, so dass die Außenwandung des Gehäuses weitestgehend von der Holzkohlekammer temperaturentkoppelt ist, nämlich einerseits aufgrund der Zwischenschaltung der von innen wärmereflektierenden Trägerschale und andererseits aufgrund des Luftraums zwischen der Trägerschale und dem Gehäuse. Auch ist es denkbar, dass der Innenboden gelocht, geschlitzt oder sonstwie durchgängig ausgeführt ist, so dass über den Ventilator auch Luft in den Bereich zwischen der Trägerschale und dem Gehäuse gesaugt oder geblasen werden kann, und von dem Zwischenraum aus in den Bereich unter den Innenboden und von dort aus durch das Lufteinlassrohr in die Holzkohlekammer gelangen kann. Auch diese Maßnahme begünstigt die Kühlung und somit eine unerwünschte Wärmeübertragung auf das Gehäuse.

In Bezug auf den Grillrost, insbesondere in Bezug auf dessen sichere Positionierung, ist es von Vorteil, wenn dieser zum Einstecken in Öffnungen im oberen Rand der Trägerschale oder im Gehäuse dienende Steckfüße aufweist, so dass eine feste Anbringung des Grillrosts am Gehäuse möglich ist. Der Grillrost selbst kann in seinem Randbereich, zumindest geringfügig oberhalb der eigentlichen Grillfläche, eine umlaufende Reling aufweisen, wobei durch diese Maßnahme ein Herunterfallen von Grillgut wirksam verhindert ist. Eine weitere Sicherheitsmaßnahme ist so geschaffen.

In Bezug auf die Festlegung des Grillrosts ist es von Vorteil, wenn dieser klemmend am Gehäuserand festlegbar ist, vorzugsweise mittels Spannmitteln, die vorzugsweise aus Metall ausgeführt sind. Bei den Spannmitteln kann es sich um Spannklammern oder dgl. handeln, wodurch ein sicheres Festlegen des Grillrosts möglich ist. Wie bereits zuvor ausgeführt, übt beim Festspannen des Grillrosts dieser eine klemmende Wirkung auf den Deckel der Holzkohlekammer aus, so dass die Holzkohlekammer wirksam zwischen der Trägerschale und dem Grillrost festgelegt ist.

In weiter vorteilhafter Weise weist der Grillrost eine mittige geschlossene, vorzugsweise gewellte Grillfläche auf. Diese Grillfläche kann wiederum einen nach außen abfallenden Tropfrand oder zumindest eine Tropfnase aufweisen, der bzw. die im Durchmesser zumindest geringfügig größer ist als der Durchmesser der Holzkohlekammer. Letztendlich überragt die geschlossene Grillfläche bei mittiger Anordnung auf bzw. im Grillrost die darunter ebenfalls mittig angeordnete Holzkohlekammer, so dass durch diese Maßnahme ein Auftropfen von Fett auf den Deckel der Holzkohlekammer zumindest weitestgehend vermieden ist. Tropfendes Fett fällt somit seitlich neben die Holzkohlekammer und kann in der Trägerschale zusammenlaufen.

Zur Begünstigung des Sammelns tropfenden Fetts ist die Trägerschale vorzugsweise mit einem zumindest teilweise umlaufenden Randbereich in das Gehäuse eingehängt, wobei der Bodenbereich der Trägerschale zu einem äußeren Randbereich abfällt und dort einen Sammelbereich für tropfendes Fett bildet. Bei der Ausgestaltung der Trägerschale aus Edelstahl lässt sich die Trägerschale einfach aus dem Gehäuse entnehmen und kann in einer Spülmaschine gereinigt werden, wie auch die anderen Bestandteile des Grills.

Auch das Gehäuse kann im Wesentlichen aus Metall bestehen, wobei der Bodenbereich unterhalb des Innenbodens ohne Weiteres auch aus Kunststoff hergestellt sein kann. Beide Bereiche können miteinander verpresst, verschraubt, verklebt oder sonstwie miteinander verbunden sein.

Auch ist es denkbar, das metallische Gehäuse zumindest außen durch Pulverbeschichtung bzw. Pulverlackierung zu veredeln. Beliebige Farbgebungen sind denkbar.

Weiter ist es von Vorteil, die Trägerschale und/oder die Holzkohlekammer (insgesamt) und/oder die Anzündschale und/oder den Grillrost aus Edelstahl herzustellen, nämlich zur Realisierung einer Langlebigkeit und zum Zwecke der einfachen Reinigung, möglichst in einer Geschirrspülmaschine.

Der nebengeordnete Anspruch 15 betrifft eine Holzkohlekammer, die die Holzkohlekammer betreffenden Merkmale des Anspruchs 1 und ggf. der Ansprüche 2 bis 14 umfasst. Ausführungen dazu erübrigen sich an dieser Stelle unter Hinweis auf die Ausführungen zum Grill, der eine entsprechende Holzkohlekammer aufweist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Sprengdarstellung die wesentlichen "äußeren" Bestandteile des erfindungsgemäßen Grills,
- Fig. 2: in einer schematischen Sprengdarstellung die wesentlichen "inneren" Bestandteile des erfindungsgemäßen Grills,
- Fig. 3: in einer schematischen Seitenansicht, geschnitten und teilweise weggebrochen, den erfindungsgemäßen Grill mit den wesentlichen Bestandteilen im zusammengebauten Zustand,
- Fig. 4: in einer schematischen Seitenansicht, geschnitten, die grundsätzliche Konstruktion der Holzkohlekammer des erfindungsgemäßen Grills,
- Fig. 5: in einer schematischen Ansicht, Draufsicht und Seitenansicht ein Ausführungsbeispiel des Deckels zum Verschließen der Holzkohlekammer nach Fig. 4,
- Fig. 6: ein erstes Ausführungsbeispiel der erfindungsgemäßen Holzkohlekammer, gefertigt aus einem Lochblech mit runder Lochung, Deckel angehoben,
- Fig. 7: das Ausführungsbeispiel der erfindungsgemäßen Holzkohlekammer nach Fig. 6, Deckel aufgesetzt,
- Fig. 8: ein zweites Ausführungsbeispiel der erfindungsgemäßen Holzkohlekammer, gefertigt aus einem Lochblech mit quadratischer Lochung, Deckel angehoben,
- Fig. 9: das Ausführungsbeispiel der erfindungsgemäßen Holzkohlekammer nach Fig. 8, Deckel aufgesetzt,
- Fig. 10: ein drittes Ausführungsbeispiel der erfindungsgemäßen Holzkohlekammer, gefertigt aus einem Lochblech mit länglicher Lochung, Deckel angehoben,
- Fig. 11: das Ausführungsbeispiel der erfindungsgemäßen Holzkohlekammer nach Fig. 10, Deckel aufgesetzt und
- Fig. 12: in einer schematischen Draufsicht ein weiteres Ausführungsbeispiel einer erfindungsgemäßen Holzkohlekammer, bei der die zueinander versetzten Wandelemente die umlaufende Wand mit seitlicher Schlitzung bilden.

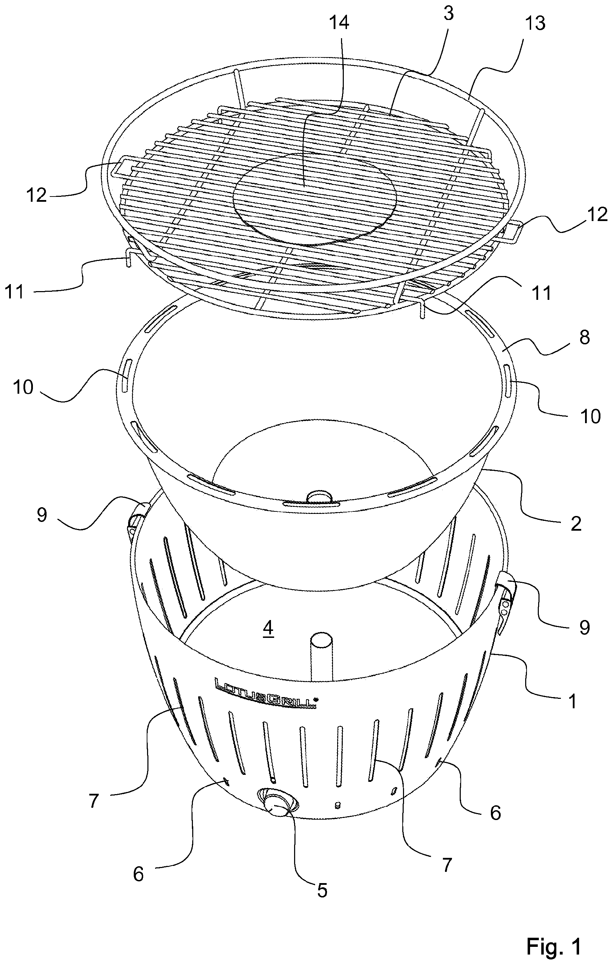

Fig. 1 zeigt in einer schematischen Sprengdarstellung die "äußeren" Bestandteile des erfindungsgemäßen Grills, nämlich, von unten beginnend, das Gehäuse 1, die in das Gehäuse 1 einsetzbare Trägerschale 2 und den darüber anordenbaren Grillrost 3.

Des Weiteren lässt Fig. 1 erkennen, dass das Gehäuse 1 im unteren Bereich einen Innenboden 4 im Sinne eines Zwischenbodens aufweist, unter dem elektrische Komponenten angeordnet sind. Von außerhalb des Gehäuses 1 ist ein Drehknopf 5 erkennbar, der zum Ein- und Ausschalten sowie zur Regulierung eines unter dem Innenboden 4 angeordneten Gebläses dient.

In der Wandung des Gehäuses 1 sind untere Durchgänge 6 vorgesehen, die zum Ansaugen von Außenluft dienen. Obere Durchgänge 7 dienen zur Hinterlüftung des Raums zwischen der Trägerschale 2 und dem Gehäuse 1.

Die Trägerschale 2 wird mit ihrem Randbereich 8 auf den freien Rand des Gehäuses 1 aufgesetzt und dort mittels Spannvorrichtung 9, die am Grillrost 3 angreifen, festgelegt. Letztendlich handelt es sich bei der Spannvorrichtung 9 um beidseitig angreifende Klammern, die den Grillrost 3 und somit auch die Trägerschale 2 fest mit dem Gehäuse 1 verbinden.

Im Randbereich 8 der Trägerschale 2 sind Ausnehmungen 10 vorgesehen, die zum positionierenden Einstecken von Füßen 11 des Grillrosts 3 dienen. Durch diese Maßnahme lässt sich der Grillrost 3 in idealer Weise positionieren, wobei die Spannvorrichtungen 9 bzw. die dort vorgesehenen Spannklammern in seitliche Befestigungslaschen 12 am Grillrost 3 greifen. Durch Spannen der Spannvorrichtungen 9 wird der Grillrost 3 fest mit dem Gehäuse 1 verbunden, und zwar unter Zwischenschaltung der Trägerschale 2, die dabei gleichermaßen fixiert wird. In der zusammengebauten Position ist zwischen dem Gehäuse 1 und der Trägerschale 2 ein wärmeisolierender Luftraum geschaffen, der über die oberen Durchgänge 7 hinterlüftet ist.

Der Grillrost 3 umfasst eine umlaufende Reling 13 und ist mittig mit einer geschlossenen, gewellten Grillfläche 14 versehen, deren Randbereich zum Abtropfen von Fett zumindest geringfügig nach unten abfallend ausgebildet sein kann.

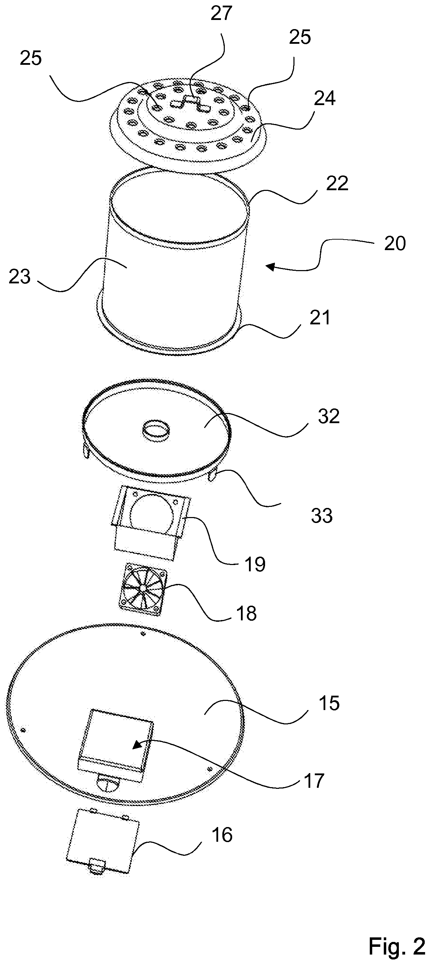

Fig. 2 zeigt in einer schematischen Sprengdarstellung die wesentlichen "inneren" Bestandteile des erfindungsgemäßen Grills, nämlich, von unten beginnend, einen das Gehäuse 1 nach unten abschließenden Boden 15, der mit einer Öffnungsklappe 16 zum Einstecken und Herausnehmen von Batterien 17 ausgestattet ist. Die Batterien 17 dienen zur Stromversorgung eines Ventilators 18, der in einem Ventilatorgehäuse 19 angeordnet ist.

Des Weiteren zeigt Fig. 2 die innerhalb des Grills vorgesehene Holzkohlekammer 20, die einen unteren abgeflanschten Randbereich 21 und einen oberen verstärkten Randbereich 22 hat. Dazwischen erstreckt sich eine besondere Wandung 23, die als feinmaschiges Sieb aus Edelstahl ausgeführt ist.

Die Holzkohlekammer 20 ist mit einem Deckel 24 ausgestattet, der zwei planparallele Flächen mit unterschiedlichem axialen Abstand zum Deckelrand aufweist. In den Flächen sind Lochgruppen 25 konzentrisch zueinander ausgebildet. Außerdem ist der Deckel 24 mit schrägen bzw. abfallenden Flächen im Übergang zwischen den die Lochgruppen 25 umfassenden Flächen und im Randbereich ausgestattet, die zum Ablaufen bzw. Abtropfen von Fett dienen.

Des Weiteren ist der Deckel 24 mit einem Henkel 27 ausgestattet, der im zusammengebauten Zustand des Grills als Klemmbügel dient, nämlich zum klemmenden Festlegen der geschlossenen Holzkohlekammer 20 zwischen dem Bodenbereich der Trägerschale 2 und dem Grillrost 3.

Auf die Anzündschale wird später eingegangen werden.

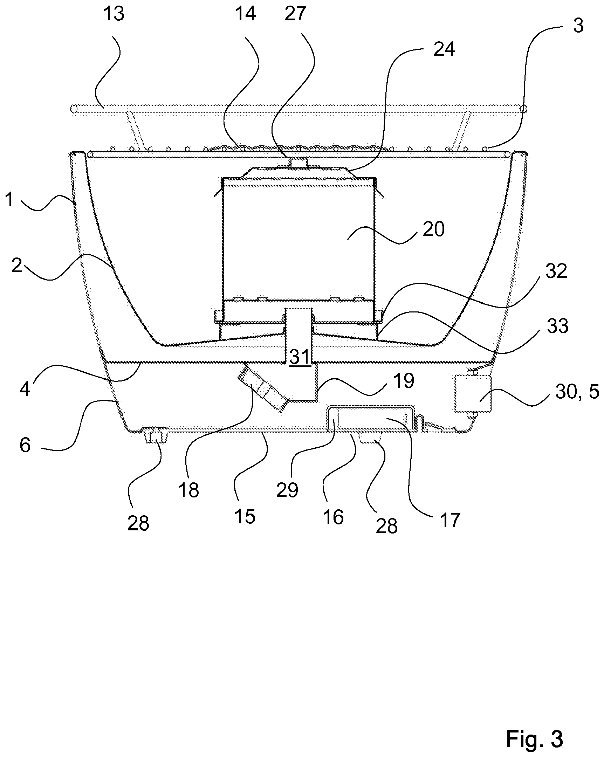

Fig. 3 zeigt den erfindungsgemäßen Grill in einer zusammengebauten Ansicht, im Schnitt, mit darin angeordneter Holzkohlekamer 20.

Von unten beginnend ist das Gehäuse 1 durch den Boden 15 geschlossen, wobei zum Positionieren des Gehäuses 1 bzw. des Grills Füße 28 vorgesehen sind. Der Boden 15 ist verschraubt oder verrastet, lässt sich jedenfalls vom Gehäuse 1 entfernen bzw. abnehmen.

Im Boden 15 ist die Öffnungsklappe 16 vorgesehen, über die ein Batteriefach 29 öffenbar ist. Im Batteriefach 29 befinden sich die Batterien 17.

Die Stromversorgung des Ventilators 18 erfolgt über die Batterien 17, wobei ein Schalter bzw. Regler 30 zwischengeschaltet ist, der den als Schalter dienenden Drehknopf 5 umfasst. Grundsätzlich ist die Drehzahl des Ventilators 18 manuell einstellbar.

Fig. 3 zeigt des Weiteren, dass der Ventilator 18 innerhalb eines Ventilatorgehäuses 19 angeordnet ist, wodurch durch untere Durchgänge 6 in das Gehäuse 1 einströmende Luft in ein Lufteinlassrohr 31 geleitet wird. Das Lufteinlassrohr 31 bzw. der so gebildete Lufteinlass erstreckt sich durch den Innenboden 4 hindurch, durch einen mittigen Durchgang in der Trägerschale 2 in einen Raum unterhalb der Holzkohlekammer 20, die in einer Anzündschale 32 steht, nämlich mit angeformten Füßen 33 auf dem Bodenbereich der Trägerschale 2. Angesaugte bzw. durch das Lufteinlassrohr 31 geblasene Luft dient zur Brennluftversorgung einer in der Anzündschale 32 befindlichen Anzündhilfe, vorzugsweise aus pastösem Material. Entsprechend wird die in der Holzkohlekammer 20 befindliche Holzkohle vermittels der Hitzeentwicklung in der Anzündschale 32 entzündet, begünstigt durch die Luftzufuhr, so dass ein schnelles Entfachen der darüber befindlichen Holzkohle realisierbar ist.

Die Holzkohlekammer 20 ist entsprechend der Darstellung in Fig. 3 mit dem Deckel 24 geschlossen, der im Sinne eines Stülpverschlusses auf der Holzkohlekammer 20 sitzt. Über den federnd wirkenden Henkel 27 ist die Holzkohlekammer 20 zwischen der Trägerschale 2 und dem Grillrost 3 festgelegt, so dass in zusammengebautem Zustand eine sichere Anordnung der Holzkohlekammer 20, im verschlossenen Zustand, gewährleistet ist.

Als oberer Abschluss ist der Grillrost 3 mit umlaufender Reling 13 angeordnet, wobei der Grillrost 3 im mittigen Bereich eine geschlossene Grillfläche 14 aufweist.

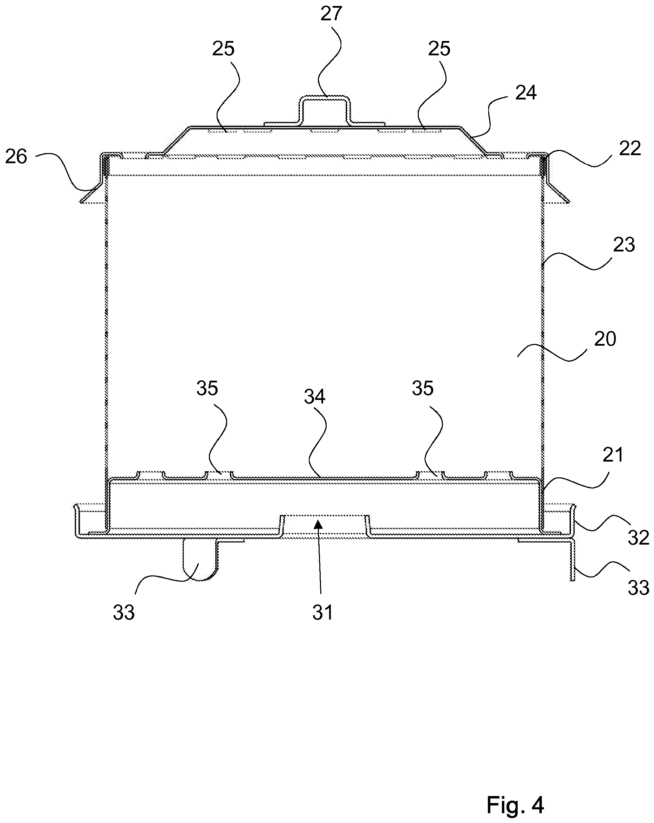

Fig. 4 zeigt die Holzkohlekammer 20 im Detail, wonach diese einen geflanschten unteren Randbereich 21 mit gelochtem Boden 34 aufweist. Durchgänge bzw. Lochgruppen 35 sind im Boden 34 ausgebildet. Die Durchgänge bzw. Lochgruppen 35 im Boden 34 dienen zum besseren Anfeuern der Holzkohle von unten, d.h. zum Anfeuern über die Anzündhilfe, die sich im zusammengebauten Zustand darunter in der Anzündschale 32 (vgl. Fig. 3) befindet.

Die Wandung 23 der Holzkohlekammer 20 weist Durchgänge auf, die später erörtert werden. Nach oben hin ist die Wandung 23 durch einen metallverstärkten, vorzugsweise umbörtelten Randbereich 22 abgeschlossen.

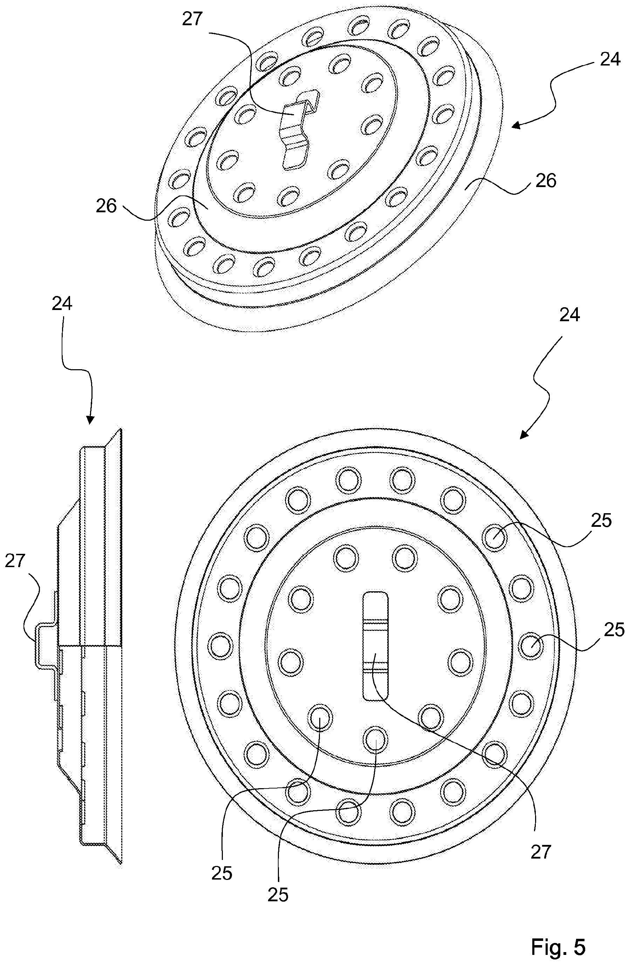

Fig. 5 zeigt den Deckel 24, mit dem die Holzkohlekammer 20 im Sinne eines Stülpverschlusses verschließbar ist. Die Lochgruppen 25 sind unterschiedlichen Flächen des Deckels 24 zugeordnet, wobei zwischen den Flächen eine abfallende Fläche sowie ein äußerer abfallenden Rand 26 vorgesehen sind. Der mittige Henkel 27 dient einerseits zur Handhabung und andererseits zum Verspannen gegenüber dem Grillrost 3. Auch der Deckel 24 ist vorzugsweise aus Edelstahl hergestellt.

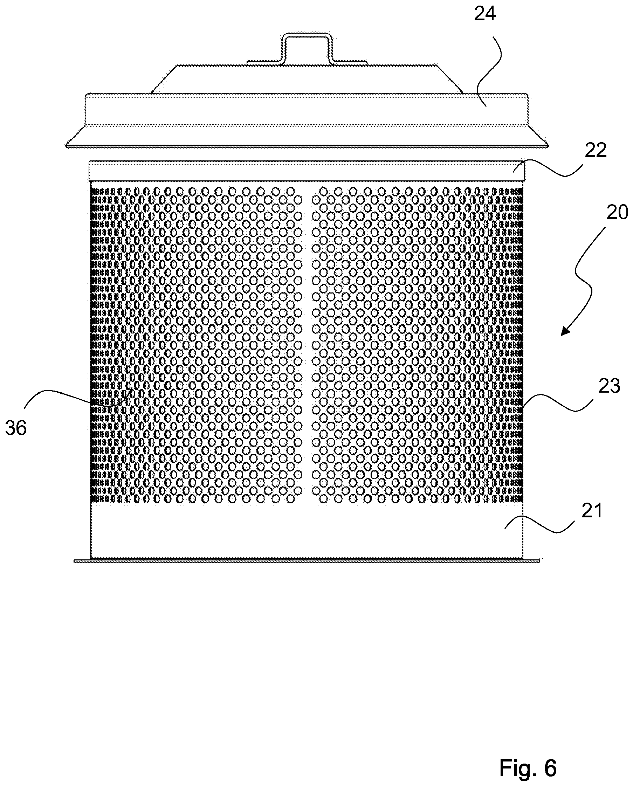

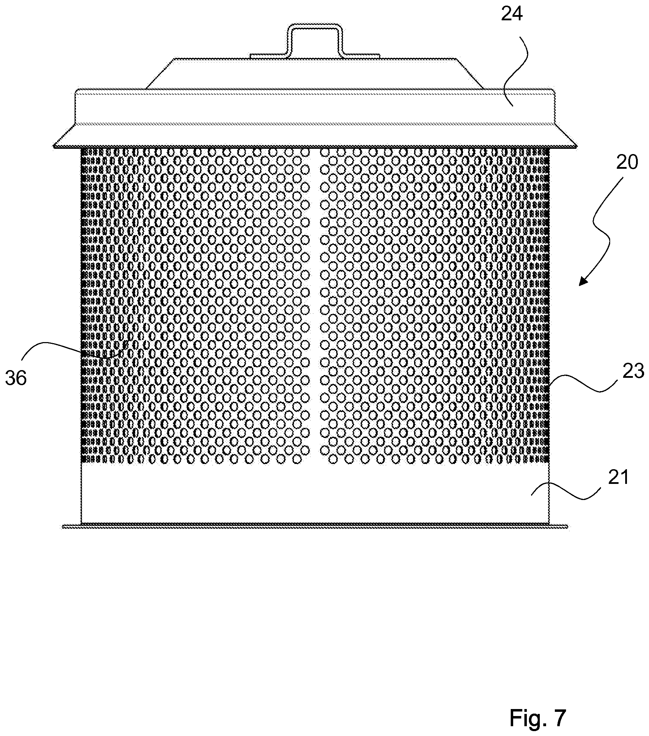

Fig. 6 und 7 zeigen ein erstes Ausführungsbeispiel einer erfindungsgemäßen Holzkohlekammer 20, bei der die Wand 23 aus einem gestanzten Lochblech mit runder Lochung 36 hergestellt ist. Der untere Randbereich 21 ist ohne Lochung und trägt somit zur Stabilität der Holzkohlekammer 20 bei. Der obere Randbereich 22 ist durch eine Falzung verstärkt. Auch dieser Randbereich 22 trägt zur Stabilität der Holzkohlekammer 20 bei.

Während bei der Darstellung in Fig. 6 der Deckel 24 angehoben ist, sitzt er gemäß Darstellung nach Fig. 7 auf der Holzkohlekammer 20 auf. Neben einer einfachen Stülpverbindung kann eine Rastverbindung, ein Bajonettverschluss, etc. zum sicheren Abschluss der Holzkohlekammer 20 vorgesehen sein.

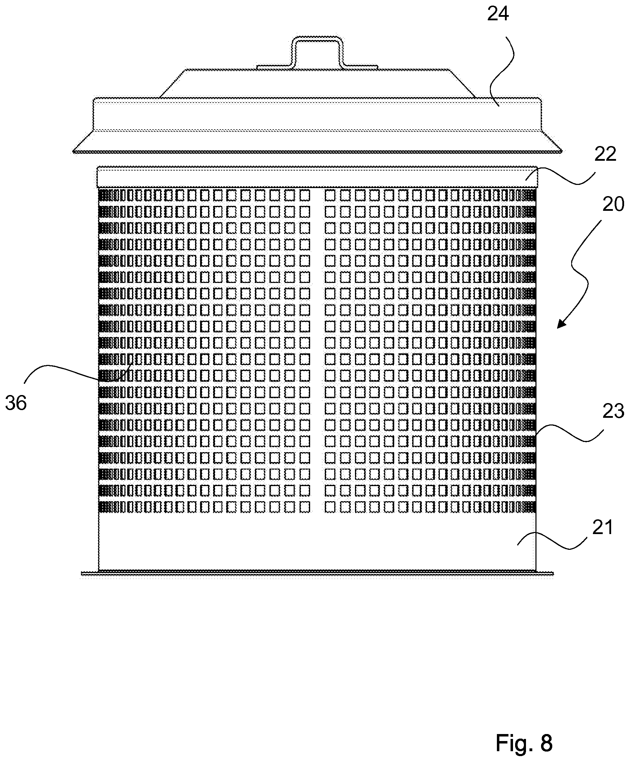

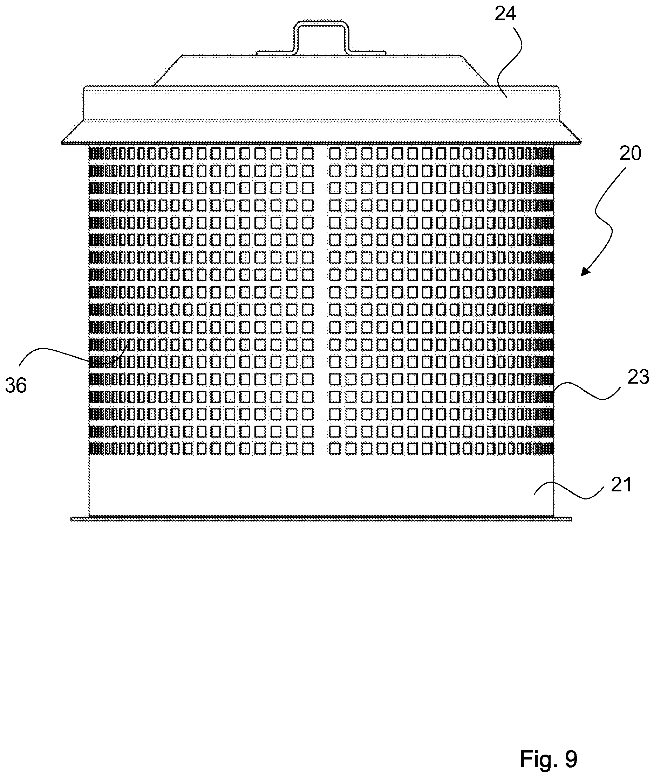

Die Fig. 8 und 9 zeigen ein weiteres Ausführungsbeispiel der erfindungsgemäßen Holzkohlekammer 20, wobei dort eine quadratische Lochung 36 in der Wand 23 der Holzkohlekammer 20 vorgesehen ist. Ansonsten entspricht dieses Ausführungsbeispiel dem Ausführungsbeispiel aus den Fig. 6 und 7.

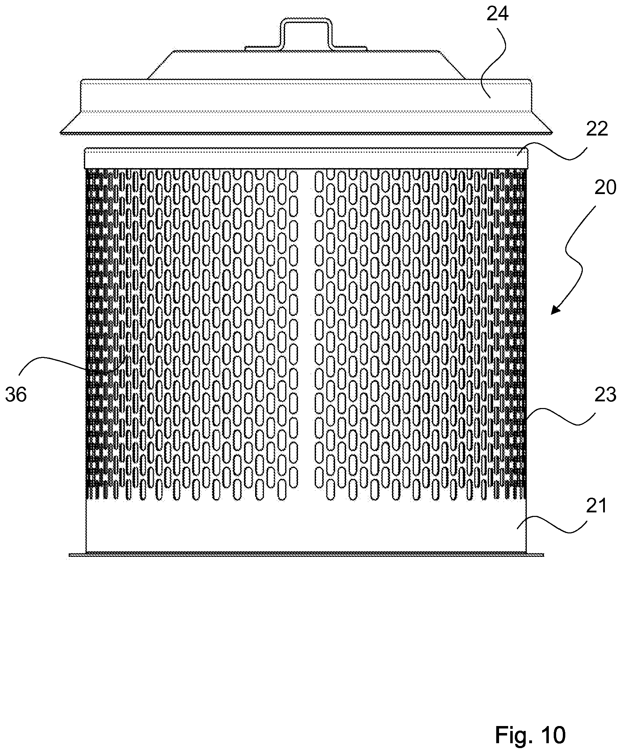

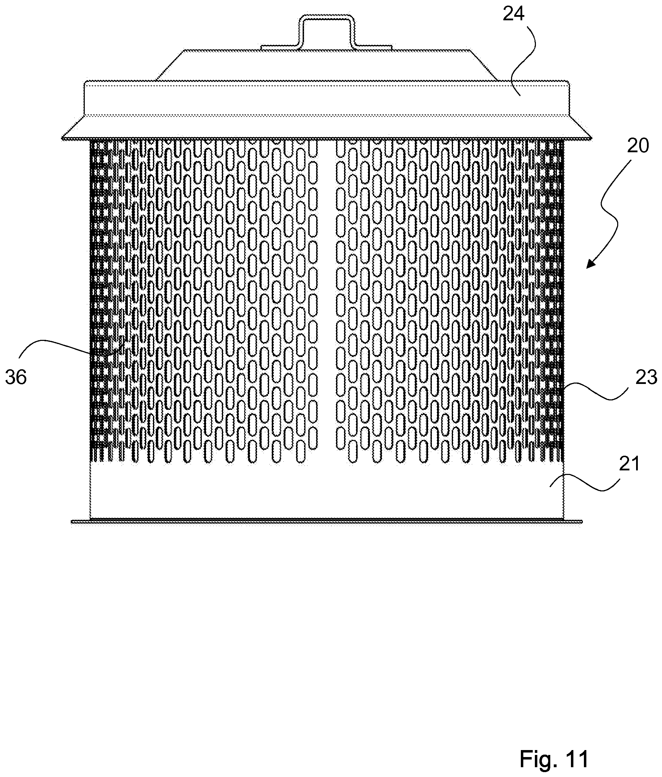

Gemäß dem in den Fig. 10 und 11 gezeigten weiteren Ausführungsbeispiel einer Holzkohlekammer 20 ist die Lochung 36 länglich, genauer gesagt in Form länglicher Schlitze, ausgeführt. Eine elliptische Ausgestaltung könnte entsprechend vorgesehen sein.

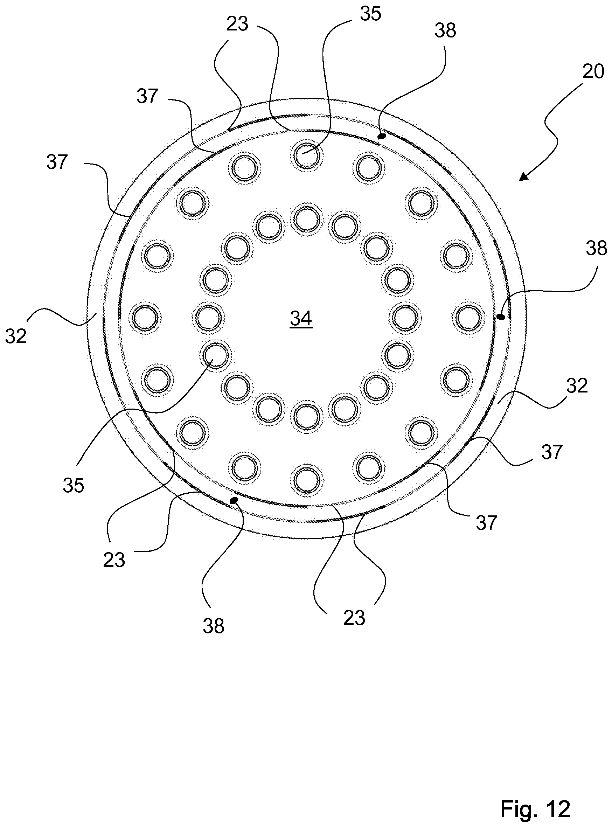

Fig. 12 zeigt in einer schematischen Draufsicht ein weiteres, besonderes Ausführungsbeispiel einer erfindungsgemäßen Holzkohlekammer 20, wobei diese Darstellung, von oben betrachtet, den Boden 34 der Holzkohlekammer 20 und die dortige Lochgruppe 35 erkennen lässt.

Die Wand 23 besteht aus zueinander versetzten Wandelementen 37, die aufgrund ihres Versatzes vertikale Spalte 38 zur Begünstigung der Wärmeabstrahlung bilden. Die Spalten 38 sind derart ausgelegt, dass weder Glut noch Funkenflug nach außen gelangen.

In Fig. 12 ist angedeutet, dass die die Wand 23 bildenden Wandelemente 37 in der Anzündschale 32 stehen, wobei die Wandelemente 37 aus ineinander angeordneten Edelstahlröhren mit entsprechenden Ausklinkungen bzw. Ausnehmungen hergestellt sein können. Wesentlich ist jedenfalls, dass die Wandelemente 37 einander überlappend ergänzen und dadurch den Spalt 38, jeweils zwischen den Wandelementen 37, bilden.

An dieser Stelle sei angemerkt, dass ein in den Figuren nicht gezeigtes Inlet vorgesehen sein kann, welches aus einem engmaschigen Stahlnetz oder Sieb bestehen kann, um nämlich die Glut weiterreichend im Inneren der Holzkohlekammer 20 zu halten.

Hinsichtlich weiterer vorteilhafter Ausgestaltungen des erfindungsgemäßen Grills wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Grills lediglich zur Erörterung der beanspruchten Lehre dienen, diese jedoch nicht auf die Ausführungsbeispiele einschränken.

### Bezugszeichenliste

- 1: Gehäuse
- 2: Trägerschale
- 3: Grillrost
- 4: Innenboden (des Gehäuses)
- 5: Drehknopf (des Schalters/Reglers)
- 6: Unterer Durchgang (in der Wandung des Gehäuses)
- 7: oberer Durchgang (in der Wandung des Gehäuses)
- 8: Randbereich (der Trägerschale)
- 9: Spannvorrichtung (zum Verspannen des Grillrosts am Gehäuse)
- 10: Ausnehmung im oberen Randbereich der Trägerschale zum Einstecken von Füßen des Grillrosts
- 11: Fuß am Grillrost
- 12: Befestigungslasche am Grillrost
- 13: Reling am Grillrost
- 14: Grillfläche, mittig auf dem Grillrost
- 15: Boden (unterer Boden des Gehäuses)
- 16: Öffnungsklappe im Boden des Gehäuses
- 17: Batterien im Batteriefach
- 18: Ventilator
- 19: Ventilatorgehäuse
- 20: Holzkohlekammer
- 21: geflanschter unterer Randbereich der Holzkohlekammer
- 22: oberer verstärkter Randbereich der Holzkohlekammer
- 23: Wandung der Holzkohlekammer, Wand
- 24: Deckel der Holzkohlekammer
- 25: Lochgruppe im Deckel
- 26: abfallende, schräge Fläche am Deckel
- 27: Henkel am Deckel
- 28: Fuß des Gehäuses
- 29: Batteriefach im Boden des Gehäuses
- 30: Regler
- 31: Lufteinlassrohr
- 32: Anzündschale
- 33: Fuß der Anzündschale
- 34: Boden der Holzkohlekammer
- 35: Lochgruppe im Boden der Holzkohlekammer
- 36: Lochung in der Wand der Holzkohlekammer
- 37: Wandelement (zur Bildung der Wand)
- 38: Spalt (zwischen den Wandelementen)

## Patentansprüche

1. Tischgrill mit einem Gehäuse (1), einer innerhalb des Gehäuses (1) allseitig mit Abstand zum Gehäuse (1) angeordneten Trägerschale (2) einer in der Trägerschale (2) stehenden, im wesentlichen zylindrischen Holzkohlekammer (20) mit zylindrischer Wand (23) und mit Deckel (24), einem oberhalb der Holzkohlekammer (20) angeordneten Grillrost und einer Luftversorgungseinrichtung, die von unterhalb der Trägerschale (2) einen in die Holzkohlekammer (20) gerichteten Luftstrom erzeugt,
**dadurch gekennzeichnet, dass** die Wand (23) der Holzkohlekammer (20) aus Edelstahlblech gefertigt und geschlitzt oder gelocht ist, wobei die Schlitze oder Löcher gerade so breit ausgelegt sind, dass es zur optimalen Wärmeabstrahlung reicht, wobei sie so schmal sind, dass weder Glut noch Funkenflug durch die Schlitze oder Löcher hindurch nach außen gelangt, und wobei die Schlitze eine Schlitzbreite im Bereich von 1 mm bis 3 mm oder die Löcher einen Lochdurchmesser im Bereich von 1 mm bis 3 mm haben.

2. Grill nach Anspruch 1, **dadurch gekennzeichnet, dass** die Wand (23) axial verlaufende, parallel zueinander ausgebildete Schlitze aufweist, die sich zwischen einem durchgehenden bodenseitigen Rand und einem durchgehenden deckelseitigen Rand erstrecken.

3. Grill nach Anspruch 1, **dadurch gekennzeichnet, dass** die Wand aus radial zueinander versetzten Wandelementen (37) besteht, die einander zumindest geringfügig überlappen und jeweils zwischen sich einen axial verlaufenden Schlitz bilden.

4. Grill nach Anspruch 1, **dadurch gekennzeichnet, dass** die Wand (23) als Lochblech ausgeführt ist.

5. Grill nach Anspruch 4, **dadurch gekennzeichnet, dass** das Lochblech eine runde Lochung (36) hat.

6. Grill nach Anspruch 4, **dadurch gekennzeichnet, dass** das Lochblech eine ovale bzw. elliptische oder längliche Lochung (36) hat.

7. Grill nach Anspruch 4, **dadurch gekennzeichnet, dass** das Lochblech eine rechteckige, vorzugsweise eine quadratische Lochung (36) hat.

8. Grill nach einem der Ansprüche 4 bis 7, **dadurch gekennzeichnet, dass** die Lochungen (36) benachbarter Lochreihen auf einer horizontalen Linie liegen oder versetzt zueinander angeordnet sind.

9. Grill nach einem der Ansprüche 1 bis 8, **dadurch gekennzeichnet, dass** die Schlitze oder Lochungen (36) vorzugsweise stanztechnisch hergestellt sind und dass nach innen gerichtete Stülpungen der Ränder ausgebildet sind.

10. Grill nach einem der Ansprüche 1 bis 9, **dadurch gekennzeichnet, dass** der Deckel (24) in seiner Fläche gelocht ist.

11. Grill nach einem der Ansprüche 1 bis 10, **dadurch gekennzeichnet, dass** innerhalb der Holzkohlekammer (20) ein siebartiges Inlet aus feinmaschigem Edelstahl angeordnet ist, welches mit zumindest geringem Spiel zu der Innenwandung der Holzkohlekammer (20) innerhalb dieser in der Trägerschale (2) steht und/oder mit der Holzkohlekammer (20) verbunden ist.

## Claims

1. Table-top grill having a housing (1), a carrier bowl (2) which is arranged inside the housing (1) with spacing from the housing (1) at all sides, a substantially cylindrical charcoal chamber (20) which stands in the carrier bowl (2) and which has a cylindrical wall (23) and cover (24), a cooking grid which is arranged above the charcoal chamber (20) and an air supply device which from below the carrier bowl (2) produces an air flow which is directed into the charcoal chamber (20),
**characterised in that** the wall (23) of the charcoal chamber (20) is produced from high-grade sheet steel and is slotted or perforated, wherein the slots or holes are configured to be precisely so wide that it is sufficient for optimum heat radiation, wherein they are so narrow that neither embers nor flying sparks reach the outer side through the slots or holes, and wherein the slots have a slot width in the range from 1 mm to 3 mm or the holes have a hole diameter in the range from 1 mm to 3 mm.

2. Grill according to claim 1, **characterised in that** the wall (23) has axially extending, mutually parallel slots which extend between a continuous lower-side edge and a continuous upper-side edge.

3. Grill according to claim 1, **characterised in that** the wall comprises wall elements (37) which are radially offset with respect to each other and which overlap each other at least slightly and which in each case form an axially extending slot between them.

4. Grill according to claim 1, **characterised in that** the wall (23) is constructed as a perforated metal sheet.

5. Grill according to claim 4, **characterised in that** the perforated metal sheet has a round perforation (36).

6. Grill according to claim 4, **characterised in that** the perforated metal sheet has an oval or elliptical or elongate perforation (36).

7. Grill according to claim 4, **characterised in that** the perforated metal sheet has a rectangular, preferably a square perforation (36).

8. Grill according to any one of claims 4 to 7, **characterised in that** the perforations (36) of adjacent rows of holes are located in a horizontal line or are arranged to be offset with respect to each other.

9. Grill according to any one of claims 1 to 8, **characterised in that** the slots or perforations (36) are preferably produced using punching technology and **in that** inwardly directed inversions of the edges are formed.

10. Grill according to any one of claims 1 to 9, **characterised in that** the cover (24) is perforated in the surface thereof.

11. Grill according to any one of claims 1 to 10, **characterised in that** there is arranged within the charcoal chamber (20) a sieve-like inlet which comprises finemesh high-grade steel and which is located with at least small play with respect to the inner wall of the charcoal chamber (20) within the chamber in the carrier bowl (2) and/or which is connected to the charcoal chamber (20).

## Revendications

1. Grill de table avec un boîtier (1), une coque de support (2) disposée à l'intérieur du boîtier (1) de façon espacée de toutes parts du boîtier (1), une chambre pour charbon de bois (20) essentiellement cylindrique, placée debout dans la coque de support (2), avec paroi (23) cylindrique et avec couvercle (24), une grille à grillade disposée au-dessus de la chambre pour charbon de bois (20), et un dispositif d'alimentation en air qui produit un flux d'air dirigé dans la chambre pour charbon de bois (20) en venant de dessous la coque de support (2),
**caractérisé en ce que** la paroi (23) de la chambre pour charbon de bois (20) est fabriquée en tôle d'acier fin, et munie de fentes ou de trous, les fentes ou les trous étant conçus de façon juste assez large pour permettre un rayonnement de chaleur optimal, tout en étant suffisamment étroits pour empêcher des braises et des étincelles de passer à travers les fentes ou les trous en direction de l'extérieur, et les fentes ayant une largeur de fente dans la plage de 1 mm à 3 mm, ou les trous ayant un diamètre de trou dans la plage de 1 mm à 3 mm.

2. Grill selon la revendication 1, **caractérisé en ce que** la paroi (23) comporte des fentes orientées axialement, constituées de façon parallèle entre elles, qui s'étendent entre un bord continu côté fond et un bord continu côté couvercle.

3. Grill selon la revendication 1, **caractérisé en ce que** la paroi se compose d'éléments de paroi (37), décalés radialement les uns par rapport aux autres, qui se chevauchent au moins légèrement et forment respectivement entre eux une fente orientée axialement.

4. Grill selon la revendication 1, **caractérisé en ce que** la paroi (23) est réalisée en tant que tôle perforée.

5. Grill selon la revendication 4, **caractérisé en ce que** la tôle perforée a une perforation (36) ronde.

6. Grill selon la revendication 4, **caractérisé en ce que** la tôle perforée a une perforation (36) ovale ou respectivement elliptique ou oblongue.

7. Grill selon la revendication 4, **caractérisé en ce que** la tôle perforée a une perforation (36) rectangulaire, de préférence carrée.

8. Grill selon l'une des revendications 4 à 7, **caractérisé en ce que** les perforations (36) de rangées de trous voisines sont situées sur une ligne horizontale ou sont disposées de façon décalée les unes par rapport aux autres.

9. Grill selon l'une des revendications 1 à 8, **caractérisé en ce que** les fentes ou perforations (36) sont de préférence réalisées par une technique d'estampage, et **en ce que** des retournements des bords dirigés vers l'intérieur sont constitués.

10. Grill selon l'une des revendications 1 à 9, **caractérisé en ce que** le couvercle (24) est perforé dans sa surface.

11. Grill selon l'une des revendications 1 à 10, **caractérisé en ce que**, à l'intérieur de la chambre pour charbon de bois (20), il est disposé un insert en acier fin de type tamis à mailles fines, lequel est placé, avec au moins un faible jeu par rapport à la paroi intérieure de la chambre pour charbon de bois (20), à l'intérieur de celle-ci dans la coque de support (2) et/ou est raccordé à la chambre pour charbon de bois (20).
